# EUROPÄISCHE PATENTSCHRIFT

(11) **EP 1 121 522 B1**
(45) Veröffentlichungstag und Bekanntmachung des Hinweises auf die Patenterteilung: **21.07.2004**
(21) Anmeldenummer: 99953806.9
(22) Anmeldetag: 13.10.1999
(51) Int. Cl.: F02M 27/04, F02B 51/04

(54) **VERFAHREN UND VORRICHTUNG ZUR PLASMACHEMISCHEN REDUZIERUNG VON GASFÖRMIGEN UND/ODER FESTEN SCHADSTOFFEN IN ABGASEN VON VERBRENNUNGSMOTOREN**
METHOD AND DEVICE FOR PLASMA-CHEMICAL REDUCTION OF GASEOUS AND/OR SOLID POLLUTANTS IN EXHAUST GASES OF INTERNAL COMBUSTION ENGINES
PROCEDE ET DISPOSITIF DE REDUCTION PLASMA-CHIMIQUE DE SUBSTANCES NOCIVES GAZEUSES ET/OU SOLIDES CONTENUES DANS LES GAZ D'ECHAPPEMENT DE MOTEURS A COMBUSTION INTERNE

(30) Priorität: 13.10.1998 DE 19847096
(43) Veröffentlichungstag der Anmeldung: 08.08.2001
(73) Patentinhaber: Massholder, Karl F., Dr., 69250 Schönau (DE)
(72) Erfinder: Massholder, Karl F., Dr., 69250 Schönau (DE)
(74) Vertreter: Isenbruck, Günter, Dr.
(86) Internationale Anmeldenummer: PCT/EP1999/007693
(87) Internationale Veröffentlichungsnummer: WO 2000/022292

(56) Entgegenhaltungen:
- US-A- 3 921 605
- US-A- 4 561 406
- PATENT ABSTRACTS OF JAPAN vol. 010, no. 077 (M-464), 26. März 1986 (1986-03-26) & JP 60 219412 A (NISSAN JIDOSHA KK), 2. November 1985 (1985-11-02)

## Beschreibung

Die Erfindung betrifft ein Verfahren zur plasmachemischen Reduzierung von gasförmigen und/oder festen Schadstoffen in Abgasen von Verbrennungsmotoren unter Verwendung von dielektrisch behinderten Entladungen sowie eine Vorrichtung hierzu.

Im Zuge der Verschärfung der Normen für die Grenzwerte für Schadstoffemisionen beim Betrieb von Verbrennungsmotoren, insbesondere in Kraftfahrzeugen, wurden neben der Verbesserung der konventionellen, insbesondere katalytischen, Verfahren neue Technologien vorgeschlagen.

Besonders vielversprechend ist hierfür die dielektrisch behinderte Entladung (im folgenden abgekürzt mit DBE bezeichnet) in einem Plasma, deren physikalische Grundlagen bereits seit langer Zeit bekannt sind. Das Plasma wird durch Anlegen einer Wechselspannung oder gepulsten Spannung zwischen zwei Elektroden erzeugt; durch Anordnung eines Dielektrikums zwischen den Elektroden kann sich jedoch keine stationäre Entladung ausbilden, sondern nur Entladungen, die nach kurzer Zeit wieder verlöschen, sogenannte stille transitorische Entladungen.

Aus Rosocha, Louis A. et al.: "Innovative Technologies for Removing Toxic Compounds from Groundwater and Air"; New Mexico Conference on the Environment, Sept. 13 - 15, 1992, Albuquerque, New Mexico ist bekannt, daß Kohlenwasserstoffe aus Gemischen mit Luft bzw. Argon / Sauerstoff im Massenverhältnis 80 : 20 abgereinigt werden können. Beispielhaft ist die Reduzierung der Konzentration an Trichlorethen, Trichlorethan, CCl₃CF₃, CCl₄ und aliphatischen Kohlenwasserstoffen beschrieben. Mit nur einigen Watt elektrischer Leistung bei einem Durchfluß von 10 l/min (entsprechend einigen 10 J/l) konnte bei gesättigtem Wasseranteil in einem Argon/Sauerstoff-Gemisch (Massenverhältnis Argon/Sauerstoff = 80 : 20) beispielsweise Trichlorethen von 650 ppm auf Werte unter einem 1 ppm, bei Leistungen von 1 kJ/l auf unter 1 ppb abgereinigt werden. Trichlorethan konnte mit einigen 10 kWh/kg Leistungseinkopplung bei Ausgangskonzentrationen im Prozentbereich auf ppm-Bereiche reduziert werden, aliphatische Kohlenwasserstoffe mit Ausgangskonzentrationen von 1000 ppm bis 3000 ppm sowie CCl₃CF₃ mit einer Ausgangskonzentration von 200 ppm um 80% bis 90%.

In Dhali, S. K. und Sardja, I.: "Dielectric-barrier Discharge for Processing of SO₂, NOₓ"; J. Appl. Phys. 69 (9), May 1, 1992 sind Untersuchungen zur Behandlung anorganischer, klassischer Schadstoffe, insbesondere von Stickoxiden und Schwefeldioxid beschrieben. Danach konnte Stickstoffmonoxid vollständig oxidiert und Schwefeldioxid je nach eingesetzten Bedingungen zu 40% - 70% abgereinigt werden.

Als gasförmige Schadstoffe werden vorliegend unerwünschte, insbesondere in Abgasnormen definierte Stoffe verstanden, überwiegend Kohlenwasserstoffe, Stickoxide und Schwefeldioxid. Ein fester Schadstoff, insbesondere in Emisionen von Dieselmotoren, ist beispielsweise Ruß.

DE-A-42 31 581 beschreibt eine Vorrichtung sowie ein Verfahren zur plasmachemischen Zersetzung und/oder Vernichtung von Schadstoffen mit einer Elektrodenanordnung für eine DBE, der die Schadstoffe zugeführt werden, wobei alle Betriebsgrößen der plasmachemischen Reaktionen, beispielsweise Temperatur, Art und Massenstrom von Beimischungen, elektrische Leistung sowie die Elektrizitätskonstante des Dielektrikums in der Weise geregelt werden sollen, daß die erwünschte Zersetzung der Schadstoffe maximiert wird. Die genannte Druckschrift betrifft jedoch lediglich die Abgasnachbehandlung mittels DBE.

Dem gegenüber ist es Aufgabe der Erfindung, eine weitergehende Reduzierung von Schadstoffen mittels DBE zu gewährleisten, wobei die Reduzierung von Schadstoffen nicht nur durch eine Abgasnachbehandlung sondern primär durch Vermeidung der Schadstoffbildung erreicht werden soll. Weiterhin sollen ein Verfahren und eine Vorrichtung zur Verfügung gestellt werden, die eine Vergleichmäßigung des Verbrennungsvorgangs in Verbrennungsmotoren sowie eine Reduzierung des Treibstoffverbrauchs gewährleisten.

Die Erfindung geht aus von einem Verfahren zur plasmachemischen Reduzierung von gasförmigen und/oder festen Schadstoffen in Abgasen von Verbrennungsmotoren unter Verwendung von dielektrisch behinderten Entladungen.

Die Lösung nach dem erfindungsgemäßen Verfahren ist dann dadurch gekennzeichnet, daß die dielektrisch behinderten Entladungen im Verbrennungsraum des Verbrennungsmotors bewirkt werden.

Es wurde gefunden, daß DBE in wirtschaftlicher Weise unmittelbar im Verbrennungsraum des Verbrennungsmotors bewirkt werden können.

Bei Anlegen eines hohen elektrischen Feldes an Elektroden, zwischen denen sich ein Gas befindet, werden freie Elektronen beschleunigt und können bei Überschreiten einer Schwellfeldstärke Schwerteilchen (Atome, Moleküle) anregen und ionisieren. Die Primär-Elektronen haben ihren Ursprung in der natürlichen Elektronenhintergrunddichte im Gas, hervorgerufen durch natürliche Radioaktivität und Höhenstrahlung.

Die freigesetzten Elektronen werden wiederum beschleunigt, und es kommt zum lawinenartigem Anwachsen der Elektronendichte und zum Gasdurchbruch (Raether-Durchbruch). Durch Überlappen von Nachfolgelawinen wird ein Entladungskanal hoher Leitfähigkeit (Streamer) aufgebaut, was zur Ausbildung eines Funkens oder Bogens führt. Bei derartiger Ausbildung der Entladung wird bei Vorhandensein metallischer Elektroden das Gas im weiteren Verlauf des Stromflusses hoch aufgeheizt, und es entsteht ein Plasma im lokalen thermischen Gleichgewicht.

Durch Vorhandensein mindestens einer dielektrischen Barriere (daher dielektrisch behinderte Entladung, DBE ) im Gasraum wird im Verlauf der Entladung durch lokale Anhäufung von Ladungen an den Dielektrikaoberflächen das interne Feld soweit reduziert, daß die Entladung wieder verlischt, d.h. ein Umschlag in ein thermisch relaxierendes Plasma mit heißen Funken und Bogen ausbleibt. Durch Anlegen einer gepulsten Spannung kann über Spannungsamplitude, Frequenz, Druck, etc. die Energieeinkopplung in das Schadgas von außen bestimmt werden.

Die dielektrische behinderte Entladung oder auch stille Entladung ist somit eine transiente Glimmentladung, die auch bei Normaldruck betrieben werden kann. Die Elektroden werden dabei durch geeignete Dielektrika vom Füllgas getrennt, eine große Anzahl unterschiedlicher Reaktionskammergeometrien (Platten-, Röhren-, Koaxial- und Mehrkammergeometrien) kann leicht verwirklicht werden, was eine hohe Flexibilität beim Einbauort zuläßt.

Für die Anwendung zur Reduzierung von Schadstoffen in Abgasen ist bedeutend, daß die DBE selbstterminierend ist, d.h. die Energieeinkopplung in das Abgasplasma erfolgt während der Dauer des Wirkstrompulses (<1µs).

Dabei werden zwar hohe Elektronentemperaturen im Bereich 10000 K bis 100000 K erreicht, abhängig z.B. von Druck, Reaktorgeometrie, Spannung und Frequenz, die Schwerteilchentemperatur hingegen erreicht wegen der geringen Ionenbeweglichkeit und der kurzen Pulsdauer wesentlich geringere Werte.

Es liegt somit ein thermisches Nichtgleichgewicht vor, was für die Behandlung von Schadstoffen in Abgasen sehr wichtig ist, da (mit einer geeigneten Kühlung) eine Behandlung nur wenig über Raumtemperatur möglich ist.

Die Schadstoffe werden demnach nicht thermisch dissoziiert, sondern primär durch Stöße mit Elektronen ( mittlere Elektronenergie 1 bis 10 eV ). Die Effektivität des Verfahrens basiert auf den hohen Elektronendichten ( 10¹⁸ cm⁻³), die dabei erzeugt werden können. Weiterhin tragen die bei der Entladung emittierten hochenergetischen Photonen ( im Vakuum -UV und UV-Bereich ) mit Sekundärprozessen zusätzlich zur Dissoziation bzw. Anregung bei.

Durch Anlegen einer hohen Spannung werden im Gasstrom Schadstoffteilchen ionisiert, wobei die freigesetzten Elektronen wiederum zur Ionisation bzw. Anregung beitragen. Es kommt zum lawinenartigen Anwachsen der Eletronendichte und zum Gasdurchbruch, verbunden mit der Emission von Photonen aus dem Übergang von angeregten Teilchen in ihren Grundzustand. Bei der Abgasbehandlung mittels der DBE sind somit sowohl Elektronen (primär) als auch Photonen (sekundär) beteiligt. Dabei ist anzumerken, daß bei Stößen mit Elektronen prinzipiell höhere Energien übertragen werden können als bei Photonen und neue Spezien, wie superangeregte neutrale oder geladene Teilchen, geschaffen werden können.

Der Abbau organischer Verbindungen durch DBE ist in seinem genauen Ablauf noch weitgehend unbekannt. Es kann jedoch als sicher gelten, daß durch die Entladung reaktive Radikale produziert werden (z.B. OH-Radikale), die durch ihre hohe Oxidationskraft auf organische Verbindungen einwirken. Insofern werden durch das DBE-Verfahren die natürlichen photochemischen Abbauprozesse in der Atmosphäre nachgebildet. Auch im optimierten Idealfall ist jedoch mit einem 100%igen Abbau und restloser Beseitigung der Schadstoffe nicht zu rechnen, da es sich bei den Trägern der Abbaureaktionen um unspezifisch reagierende Radikale handelt. Radikalreaktionen finden zwar auch nach bestimmten Mechanismen statt, eine Vorhersage der entstehenden Produkte ist jedoch schwierig. Zusätzlich wird die Frage der Nebenprodukte dadurch weiter kompliziert, daß nicht nur mit OH-Radikalen gerechnet werden kann, sondern auch Stickstoff-Sauerstoffradikale unter entsprechenden Randbedingungen entstehen können. Diese können - hypothetisch - mit entsprechenden organischen Molekülen reagieren und diese beispielsweise zu nitroaromatischen Strukturen umsetzen.

Zusätzlich entstehen bei DBE Vakuum-UV-Photonen, d.h. Photonen mit einer Wellenlänge <170 nm direkt am Reaktionsort, die eine weitere Radikalbildung und sogar eine Dissoziation weiterer Schadstoffe hervorrufen.

Die DBE werden in vorteilhafter Weise durch eine gepulste Spannung erzeugt, die zwischen zwei metallischen Bauteilen des Verbrennungsraumes angelegt ist, die durch ein Dielektrikum, insbesondere mindestens ein keramisches Bauteil, von einander getrennt sind. Gemäß dem erfindungsgemäßen Verfahren können somit bereits vorhandene metallische Bauteile des Verbrennungsraumes in kostengünstiger, wirtschaftlicher Weise genutzt werden. Dafür kommen insbesondere Zündkerzen oder Teile derselben, der Kolbenboden oder Wände der Verbrennungskammer oder Teile derselben in Betracht. Das Dielektrikum muß die beiden Elektroden elektrisch trennen; grundsätzlich ist dafür jedes dielektrische Material geeignet, wobei es keine Einschränkungen bzgl. Form und Anordnung des Dielektrikums gibt. Besonders bevorzugt wird dafür ein keramisches Bauteil eingesetzt.

In bevorzugter Weise beträgt die Frequenz der angelegten gepulsten Spannung 50 Hz bis 50 kHz, bevorzugt 1 - 30 kHz.
Besonders bevorzugt wird eine Spannung mit Rechteck-Pulsen angelegt.
Vorteilhaft beträgt die Spannung von 1 - 500 kV, bevorzugt 10 - 300 kV.

Gemäß einer besonders vorteilhaften Verfahrensvariante werden die DBE mittels einer Steuerung im Zeitpunkt der Gemischzündung und/oder zu einem späteren Zeitpunkt im Verbrennungszyklus ausgelöst, wobei die Steuerung last- und schadstoffabhängig über Spannung und/oder Frequenz erfolgt. Durch eine derartige Steuerung, vergleichbar der Zündsteuerung, kann die DBE im optimalen Zeitpunkt der Gemischzündung ausgelöst werden und dadurch zu einer gleichmäßigeren und schadstoffärmeren Verbrennung führen. Dadurch wird die primäre Entstehung von Schadstoffen im Verbrennungsvorgang reduziert. Die Verbrennung setzt dabei auch bei sehr mageren Gemischen im gesamten Verbrennungsraum weitgehend gleichzeitig und gleichmäßig ein, bedingt durch das schlagartige Durchbrechen der Elektronenlawine und die blitzartig entstehenden Vakuum-UV-Photonen. Die Ausbreitung des Verbrennungsvorgangs wird dadurch nicht mehr von der relativ langsamen Flammenfront limitiert. Ebenso wird bei diesen Motoren eine gleichmäßigere und damit schadstoffärmere Verbrennung bewirkt.

Zusätzlich können mit einer zweiten Entladung in einem Verbrennungszyklus, beispielsweise während des Ausstoßungsvorgangs, entstandene Schadstoffe noch im Verbrennungsraum reduziert werden.

Besonders vorteilhaft ist eine Steuerung der DBE in der Weise, daß dieselben überwiegend in der Kaltstartphase ausgelöst werden und beispielsweise über eine Temperatursteuerung nach Einsetzen der Wirkung des konventionellen Katalysators heruntergeregelt werden. Die Kaltstartphase, in der Regel die ersten 200 Betriebssekunden, verursacht in bekannter Weise über 90% der kumulativen Emissionen an Kohlenwasserstoffen in einem genormten Testzyklus. Zur Schadstoff-, insbesondere NOₓ-Reduktion im Dauerbetrieb ist eine lastabhängige Steuerung vorteilhaft. Dadurch wird der Verbrauch an elektrischer Energie minimiert und somit die Wirtschaftlichkeit verbessert.

Gemäß einer weiteren vorteilhaften Verfahrensvariante wird die Abbauleistung zusätzlich durch gezielte Erzeugung von UV-Strahlung spezieller Wellenlänge erhöht. Danach wird zwischen Dielektrikum und benachbarter Elektrode in eine für UV-Strahlen durchlässige Kammer, insbesondere aus synthetischem Quarz, ein Füllgas eingebracht, das beim Zünden der DBE UV-Strahlen bestimmter Wellenlängen aussendet, die gezielt mit den Schadstoffen im Verbrennungsgas in Wechselwirkung treten. Als Füllgase kommen insbesondere Excimer-Gase in Betracht, beispielsweise Edelgashalogenide. Dabei haben bestimmte Füllgase oder Füllgasgemische spezielle Wellenlängen der UV-Strahlung zur Folge, wie z.B. XeCl: 308 nm, KrBr: 207 nm; KrCl: 222 nm.

Die Zündung der Gasentladung erfolgt unabhängig zur Strömungsrichtung des Gases. Dabei kann durch eine Vielzahl von Parametern, wie Elektrodenanordnung und-material, gegebenenfalls mit katalytischer Aktivität, sowie Oberflächenbeschaffenheit der Elektroden, Druck und Temperatur, Frequenz und Betriebsspannung den Wirkungsgrad und die Kinetik der Reaktion entscheidend beeinflussen.

Erfindungsgemäß wird auch eine Vorrichtung zur Verfügung gestellt, wobei zwei metallische Bauteile des Verbrennungsraums eines Verbrennungsmotors durch ein Dielektrikum, insbesondere mindestens ein keramisches Bauteil, getrennt sind und wobei an die beiden metallischen Bauteile, die die Funktion von Elektroden haben, eine gepulste Spannung von 1 bis 500 kV, bevorzugt 10 bis 300 kV, und eine Frequenz von 500 Hz bis 50 kHz, bevorzugt 1 bis 30 kHz, bevorzugt mit Rechteckpulsen, angelegt ist. Erfindungsgemäß fungieren somit metallische Bauteile des Verbrennungsraums selbst als Elektroden; bevorzugt werden dazu der Kolbenboden oder ein Teil desselben und/oder eine Zündkerze oder ein Teil derselben genutzt.

Gemäß einer bevorzugten Ausführungsform ist eine Elektrode der Kolbenboden oder ein Teil des Kolbenbodens und das Dielektrikum in räumlicher Nähe des Kolbenbodens, insbesondere unmittelbar auf dem Kolbenboden, angeordnet.

Gemäß einer weiteren bevorzugten Ausführungsform ist eine Elektrode eine Zündkerze, und ein Dielektrikum in räumlicher Nähe der Zündkerze, bevorzugt unmittelbar auf der Zündkerze, angeordnet.

Gemäß einer weiteren Ausführungsform kann zusätzlich im Raum zwischen Elektrode und benachbartem Dielektrikum eine für UV-Strahlen transparente Kammer, beispielsweise aus synthetischem Quarz, vorgesehen sein, die ein Füllgas, insbesondere ein Excimer-Gas, enthält. Als Füllgase können dazu insbesondere Edelgashalogenide, beispielsweise XeCl, KrBr, KCl oder Genische hiervon eingesetzt werden.

Bevorzugt ist auch eine DBE-Behandlung der Abgase unmittelbar am Auslaß des Verbrennungsmotors vorgesehen; bedingt durch die hohe Abgastemperatur in diesem Bereich wird eine weitere Verbesserung der Abgasreduzierung erreicht.

Die Erfindung wird im folgenden anhand von Zeichnungen sowie von Beispielen näher erläutert.

Es zeigen:
Figur 1 in bevorzugtes Ausführungsbeispiel einer erfindungsgemäßen Vorrichtung und
Figur 2 in weiteres bevorzugtes Ausführungsbeispiel. Gleiche oder gleich wirkende Bauteile wurden dabei mit denselben Bezugsziffern bezeichnet.
Figur 3 die schematische Darstellung einer Versuchsanordnung zur Messung des Druckverlaufs in einer Zündzelle,
Figur 3a eine Schnittdarstellung der Zündzelle und
Figur 4 den Druckverlauf über die Zeit bei einer Zündung mit Zündkerze im Vergleich zu einer Zündung mittels dielektrisch behinderter Entladung.

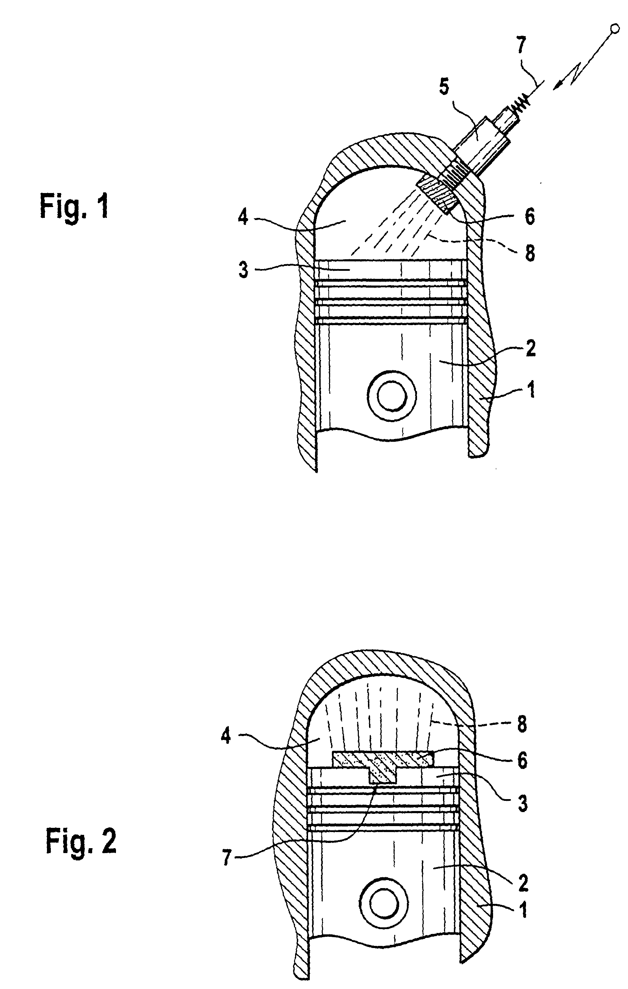

Die schematische Darstellung in Figur 1 zeigt einen Längsschnitt durch den Verbrennungsraum eines Verbrennungsmotors mit Zylinderwand 1, Kolben 2 mit Kolbenboden 3 und Verbrennungsraum 4. An das Zündelement 5 wird eine Hochfrequenzspannung 7 angelegt und durch Entladung über die hinter dem Dielektrikum 6 angeordnete, nicht dargestellte Elektrode zum gegenüberliegenden Kolbenboden 3 ein Plasma 8 erzeugt. Durch Anordnung des Dielektrikums 6 in unmittelbarer Nähe des Zündelements 5 werden dielektrisch behinderte Entladungen bewirkt.

Gemäß einer Ausführungsvariante kann das Dieletrikum 6 vom der Zündelement 5 beabstandet angeordnet sein, wobei in den Bereich zwischen Zündelement 5 und Dielektrikum 6 eine nicht dargestellte Kammer aus UV-durchlässigem Material, beispielsweise aus synthetischem Quarz, angeordnet sein kann, die ein Füllgas enthält.

Figur 2 zeigt eine weitere bevorzugte Ausführungsvariante einer erfindungsgemäßen Vorrichtung im Längsschnitt mit Zylinderwand 1, Kolben 2 mit Kolbenboden 3 und Verbrennungsraum 4. Durch Anlegen einer Hochfrequenzspannung 7 zwischen einer hinter dem Dielektrikum 6 angeordneten, nicht dargestellten Elektrode 3 und der gegenüberliegenden Wand des Brennraums 4 wird ein Plasma 8 erzeugt und, durch Anordnung eine Dielektrikums 6 in unmittelbarer Nähe des Kolbenbodens 3 dielektrisch behinderte Entladungen bewirkt.

Analog zur besonderen Vorrichtungsvariante nach Figur 1 kann das Dielektrikum 6 vom Kolbenboden 3 beabstandet sein und in den Bereich zwischen Kolbenboden 3 und Dielektrikum 6 eine für UV-Strahlen transparente, nicht dargestellte Kammer beliebiger Geometrie angeordnet sein, die ein Füllgas enthält.

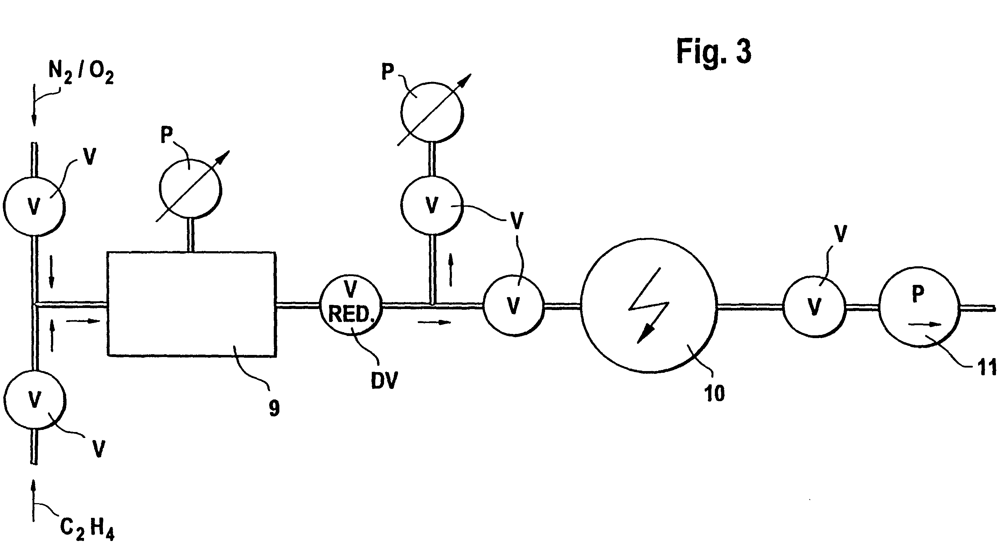

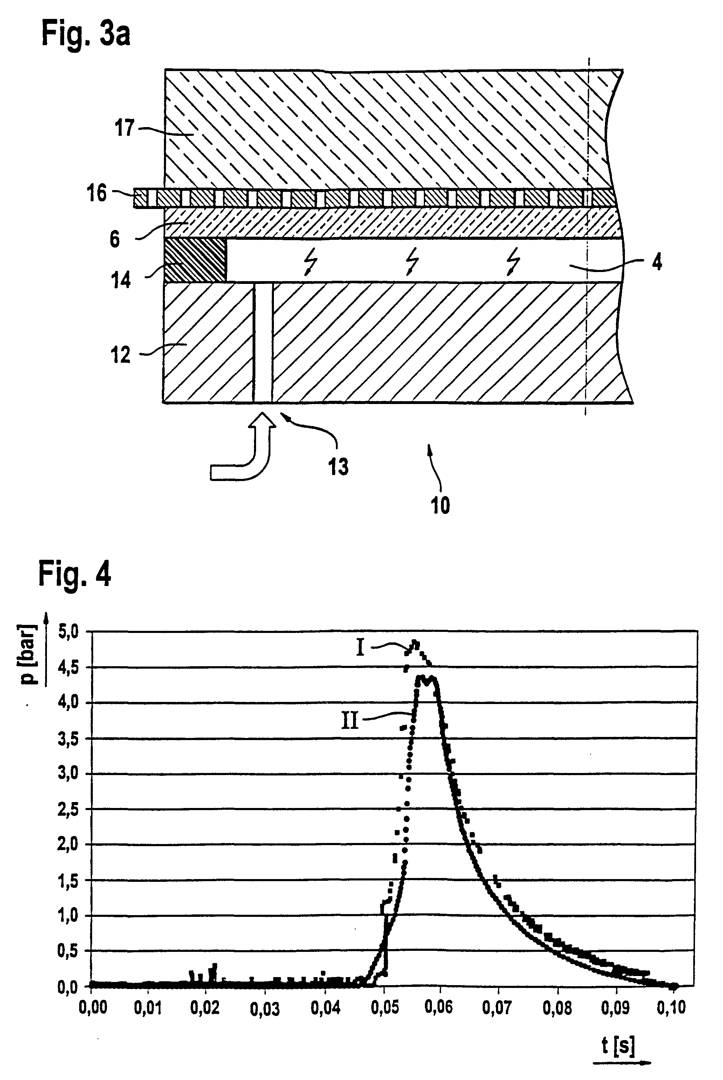

Figur 3 zeigt die schematische Darstellung eines Versuchsaufbaus zur Messung des Druckverlaufs bei Zündung eines Gemisches mittels dielektrisch behinderter Entladungen. In eine Gasleitung werden über Ventile V Ethylen (C₂H₄) als Brenngas sowie synthetische Luft, d h. ein Stickstoff/Sauerstoff-Gemisch im Volumenverhaltnis 80% Stickstoff zu 20% Sauerstoff zudosiert. Das Ethylen/Luft-Gemisch trat in die Mischkammer 1 ein, wobei der Gasmengendurchfluss durch die Mischkammer 1 mittels eines ersten Baratrons P gesteuert wurde. Im weiteren Verlauf der Gasleitung zwischen Mischkammer 1 und der Zündzelle 2 waren zusätzliche Einrichtungen zur Steuerung der Gasmenge vorgesehen: ein Drosselventil DV, Ventile V sowie ein weiteres Baratron P Die Zündzelle war als zylindrische Kammer aufgebaut, deren Abmessungen annähernd denjenigen des Brennraums in einem Kolbenverbrennungsmotor entsprachen

Die Vakuumpumpe 3 diente zur Vakuumierung der Versuchsanlage vor Durchführung des Versuchs sowie bis zum Abziehen der Verbrennungsgase nach Versuchsabschluß

Die Zündzelle 2 ist vergroßert in Figur 3a im Längsschnitt dargestellt: Auf einem massiven Metallunterbau 4 aus einer Eisenlegierung mit Einlaßoffnung 5 fur das Brennstoff/Luftgemisch waren in übereinanderliegenden Schichten ein Isolierring 6 aus Teflon als Abstandhalter, ein durchsichtiges Dielektrikum 7 aus Quarzglas, eine Lochblechelektrode 8 aus Eisenblech sowie ein Quarzglasblock 9 angeordnet und zusammengepresst unter Ausbildung einer scheibenförmigen Verbrennungskammer 10. Die Verbrennungskammer 10 war mit einem nicht dargestellten Auslaß für die Verbrennungsgase verbunden In den Metallunterbau 4 war ein nicht dargestelltes Gewinde gebohrt, das die Aufnahme einer in den Verbrennungsraum 10 hineinragenden Zündkerze ermöglichte. Der Verbrennungsraum 10 wies schließlich noch einen nicht dargestellten Anschluß für einen Druckaufnehmer auf, der zur Aufzeichnung des Druckverlaufs über die Zeit eingesetzt wurde.

Die beispielhaft eingesetzte Zündzelle 2 wies einen Durchmesser von 100 mm und eine Höhe von 103mm auf mit folgenden Hohen der einzelnen Bauteile.
- Metallunterbau (Bezugsziffer 4) - 60 mm,
- Isolierring (Bezugsziffer 6) - 3 mm,
- Dielektrikum (Bezugsziffer 7) - 4 mm,
- Lochblechelektrode (Bezugsziffer 8) - 1 mm
- Quarzglasdruck (Bezugsziffer 9) - 35 mm

Der freie Verbrennungsraum 10 hatte eine Höhe von 3mm und einen Innendurchmesser von 80mm.

Der Metallunterbau 4 und die Lochblechelektrode 8 wurden an einen Plasmagenerator angeschlossen, der mit einer Hochspannung von ca 10 kV und einer Frequenz von 1 - 10 kHz betrieben wurde

Figur 4 zeigt eine grafische Darstellung des Druckverlaufs in der Verbrennungskammer 10 bei einem Lambda-Wert von 0,8. Der Lambda-Wert bezeichnet in bekannter Weise das Luft/Kraftstoff-Verhältnis von Verbrennungsreaktionen, wobei λ = 1 dem stöchiometrischen Verhältnis entspricht. Auf die Ordinate ist der Druck p in bar und auf der Abszisse die Zeit t in Sekunden dargestellt. Die Kurve I zeigt den Druckverlauf bei der Zündung nach dem erfindungsgemäßen Verfahren mittels dielektrisch behinderter Entladungen und die Kurve II den Druckverlauf bei einer konventionellen Zündung mittels Zündkerze Die Darstellung in Figur 4 zeigt, daß der Druckanstieg bei dem erfindungsgemäßen Verfahren (Kurve I) deutlich steiler und höher gegenüber dem konventionellen Verfahren (Kurve II) ausfallt. Unter identischen Messbedingungen wurde bei einem Verfahren nach der Erfindung ein Druckanstieg bis nahe 5,0 bar erreicht, gegenüber weniger als 4,5 bar bei dem konventionellen Verfahren Der Verbrennungsvorgang nach dem erfindungsgemäßen Verfahren ist somit schneller und vollstandiger

Erfindungsgemäß werden die Schadstoffe in Abgasen von Verbrennungsmotoren reduziert, wobei insbesondere die primäre Entstehung von Schadstoffen im Verbrennungsraum reduziert wird.

Die erfindungsgemäße Vorrichtung und das Verfahren sind besonders geeignet, den Verbrennungsvorgang selbst im Verbrennungsraum zu verbessern, insbesondere zu vergleichmaßigen. Dadurch wird insbesondere auch eine Reduzierung des Treibstoffverbrauchs erreicht, sowohl bei Magermotoren als auch bei Dieselmotoren.

Besonders vorteilhaft wird auch bei mageren Brennstoffgemischen eine effektivere Verbrennung gewährleistet.

Weiterhin wird erfindungsgemäß ein verzogerungsfreies Anspringen des Schadstoffabbaus gewährleistet, d h. das Verfahren und die Vorrichtung sind insbesondere auch fur die besonders kritische Kaltstartphase beim Betriebsbeginn, in der Regel die ersten 200 Sekunden, geeignet, die üblicherweise 70% der kumulativen Emissionen an Kohlenwasserstoffen in einem genormten Testzyklus verursachen.

Indem das erfindungsgemäße Verfahren direkt im Verbrennungsraum eingreift, wird durch ein geändertes Zündverhalten der Verbrennungsvorgang selbst verbessert, dadurch der spezifische Brennstoffverbrauch gesenkt und die in bereits reduzierter Menge entstandenen Schadstoffe unmittelbar im Verbrennungsraum abgebaut.

## Patentansprüche

1. Verfahren zur plasmachemischen Reduzierung von gasförmigen und/oder festen Schadstoffen in Abgasen von Verbrennungsmotoren unter Verwendung von dielektrisch behinderten Entladungen, **dadurch gekennzeichnet, daß** die dielektrisch behinderten Entladungen im Verbrennungsraum (4) des Verbrennungsmotors bewirkt werden.

2. Verfahren nach Anspruch 1, **dadurch gekennzeichnet, daß** die dielektrisch behinderten Entladungen durch eine gepulste Spannung (7) erzeugt werden, die zwischen zwei metallischen Bauteilen des Verbrennungsraums (4) angelegt ist, die durch ein Dielektrikum (6), insbesondere mindestens ein keramisches Bauteil, von einander getrennt sind.

3. Verfahren nach Anspruch 2, **dadurch gekennzeichnet, daß** die Frequenz der gepulsten Spannung (7) 500 Hz bis 50 kHz, bevorzugt 1 bis 30 kHz betragt

4. Verfahren nach Anspruch 2 oder 3, **gekennzeichnet durch** eine Spannung (7) mit Rechteck - Pulsen.

5. Verfahren nach einem der Anspruche 2 bis 4, **dadurch gekennzeichnet, daß** die angelegte Spannung (7) 1 bis 500 kV, bevorzugt 10 bis 300 kV, beträgt

6. Verfahren nach einem der Ansprüche 1 bis 5, **dadurch gekennzeichnet, daß** die dielektrisch behinderten Entladungen mittels einer Steuerung im Zeitpunkt der Gemischzündung und/oder zu einem späteren Zeitpunkt im Verbrennungszyklus ausgelöst werden und daß die Steuerung last- und schadstoffabhängig über Spannung und/oder Frequenz erfolgt.

7. Verfahren nach einem der Ansprüche 1 bis 6, **dadurch gekennzeichnet, daß** zwischen Dielektrikum (6) und benachbarter Elektrode in einer für UV-Strahlen durchlassigen Kammer ein Fullgas eingebracht ist, das beim Zünden der dielektrisch behinderten Entladungen UV-Strahlen bestimmter Wellenlangen aussendet, die gezielt mit den Schadstoffen im Verbrennungsgas in Wechselwirkung treten.

8. Vorrichtung zur Durchführung des Verfahrens nach einem der Ansprüche 1 bis 7, **dadurch gekennzeichnet, daß** zwei metallische Bauteile des Verbrennungsraums (4) eines Verbrennungsmotors durch ein Dielektrikum (6), insbesondere mindestens ein keramisches Bauteil, getrennt sind und daß an die beiden metallischen Bauteile, die die Funktion von Elektroden haben, eine gepulste Spannung von 1 bis 500 kV, bevorzugt 10 bis 300 kV, und eine Frequenz von 500 Hz bis 50 kHz, bevorzugt 1 bis 30 kHz, bevorzugt mit Rechteck-Pulsen, angelegt ist

9. Vorrichtung nach Anspruch 8, **dadurch gekennzeichnet, daß** eine Elektrode der Kolbenboden (3) oder ein Teil des Kolbenbodens (3) ist und daß das Dielektrikum (6) in raumlicher Nähe des Kolbenbodens (3), insbesondere unmittelbar auf dem Kolbenboden (3), angeordnet ist.

10. Vorrichtung nach Anspruch 8 oder 9, **dadurch gekennzeichnet, daß** eine Elektrode eine Zündkerze (5) ist, und daß ein Dielektrikum (6) in raumlicher Nähe der Zündkerze (5), bevorzugt unmittelbar auf der Zündkerze (5), vorgesehen ist.

## Claims

1. Method for the plasma-chemical reduction of gaseous and/or solid pollutants in exhaust gases of internal combustion engines by using dielectric-barrier discharges, **characterized in that** the dielectric-barrier discharges are carried out in the combustion space (4) of the internal combustion engine.

2. Method according to Claim 1, **characterized in that** the dielectric-barrier discharges are produced by a pulsed voltage (7) which is applied between two metallic components of the combustion space (4) that are separated from each other by a dielectric (6), in particular by at least one ceramic component.

3. Method according to Claim 2, **characterized in that** the frequency of the pulsed voltage (7) is from 500 Hz to 50 kHz, preferably from 1 to 30 kHz.

4. Method according to Claim 2 or 3, **characterized by** a voltage (7) having square-wave pulses.

5. Method according to one of Claims 2 to 4, **characterized in that** the applied voltage (7) is from 1 to 500 kV, preferably from 10 to 300 kV.

6. Method according to one of Claims 1 to 5, **characterized in that** the dielectric-barrier discharges are triggered at the mix-ignition time and/or at a later time in the combustion cycle by a control, and **in that** the control is performed by means of voltage and/or frequency as a function of the load and pollutants.

7. Method according to one of Claims 1 to 6, **characterized in that** a filler gas which, when the dielectric-barrier discharges are ignited, emits UV rays at particular wavelengths which interact in a specifically intended way with the pollutants in the combustion gas, is introduced between the dielectric (6) and the neighbouring electrode into a chamber that is transparent to UV rays.

8. Device for carrying out the method according to one of Claims 1 to 7, **characterized in that** two metallic components of the combustion space (4) of an internal combustion engine are separated by a dielectric (6), in particular by at least one ceramic component, and **in that** a pulsed voltage of from 1 to 500 kV, preferably from 10 to 300 kV, and a frequency of from 500 Hz to 50 kHz, preferably from 1 to 30 kHz, preferably with square-wave pulses, are applied to the two metallic components which have the function of electrodes.

9. Device according to Claim 8, **characterized in that** one electrode is the piston bottom (3) or a part of the piston bottom (3), and **in that** the dielectric (6) is arranged in the spatial vicinity of the piston bottom (3), in particular directly on the piston bottom (3).

10. Device according to Claim 8 or 9, **characterized in that** one electrode is a spark plug (5), and **in that** a dielectric (6) is arranged in the spatial vicinity of the spark plug (5), in particular directly on the spark plug (5).

## Revendications

1. Procédé pour la réduction par plasma chimique de déchets solides et/ou sous forme gazeuse dans les gaz de combustion des moteurs à explosion en utilisant des décharges à barrière diélectrique, **caractérisé en ce que**, les décharges à barrière diélectrique sont effectuées dans la chambre de combustion (4) du moteur à explosion.

2. Procédé selon la revendication 1, **caractérisé en ce que**, les décharges à barrière diélectrique sont générées au moyen d'une tension pulsée (7), qui s'applique entre deux éléments métalliques de la chambre de combustion (4), ces deux éléments étant séparés l'un de l'autre par un diélectrique (6), en particulier au moins un élément en céramique.

3. Procédé selon la revendication 2, **caractérisé en ce que**, la fréquence de la tension pulsée est comprise entre 500 Hz et 50 kHz, de préférence entre 1 à 30 kHz.

4. Procédé selon la revendication 2 ou 3, **caractérisé par** une tension (7) avec des impulsions de forme créneau.

5. Procédé selon l'une des revendication 2 à 4, **caractérisé en ce que** la tension appliquée (7) est comprise entre 1 et 500 kV, de préférence entre 10 et 300 kV.

6. Procédé selon l'une des revendications 1 à 5, **caractérisé en ce que** les décharges à barrière diélectrique sont déclenchées au moyen d'une commande à l'instant précis de la détonation du mélange et/ou à un instant ultérieur du cycle de combustion et que la commande concerne la tension et/ou la fréquence en fonction de la charge et des déchets.

7. Procédé selon l'une des revendications 1 à 6, **caractérisé en ce qu'**un gaz de remplissage est introduit entre un diélectrique (6) et une électrode voisine dans une chambre transparente aux rayons UV, ce gaz émettant des rayons UV de longueurs d'onde déterminées lors de la décharge à barrière diélectrique, ces rayons UV entrant en interaction avec les déchets du gaz de combustion de manière ciblée.

8. Dispositif pour mettre en oeuvre le procédé selon l'une des revendications 1 à 7, **caractérisé en ce que**, deux éléments métalliques de la chambre de combustion (4) d'un moteur à explosion sont séparés par un diélectrique (6), en particulier au moins un élément en céramique et **en ce qu'**une tension pulsée de 1 à 500 kV, de préférence de 10 à 300 kV, et à une fréquence de 500 Hz à 50 kHz, de préférence de 1 à 30 kHz, de préférence ayant la forme d'impulsions-créneau est appliquée aux deux éléments métalliques, qui ont la fonction d'électrodes.

9. Dispositif selon la revendication 8, **caractérisé en ce que**, une électrode est la tête de piston (3) ou une partie de la tête de piston (3) et que le diélectrique (6) est disposé à proximité de la tête de piston (3), directement sur la tête de piston (3).

10. Dispositif selon la revendication 8 ou 9, **caractérisé en ce que**, une électrode est une bougie d'allumage (5), et **en ce qu'**un diélectrique est prévu à proximité de la bougie d'allumage (3), de préférence la bougie d'allumage (5).
